# EUROPEAN PATENT SPECIFICATION

(11) **EP 4 554 041 B1**
(45) Date of publication and mention of the grant of the patent: **16.09.2026**
(21) Application number: 23834459.2
(22) Date of filing: 19.04.2023
(51) Int. Cl.: H02J 7/00, H02H 3/027, H02H 7/18, H01H 13/14, G08C 17/02

(54) **KEY CONTROL CIRCUIT, METHOD AND APPARATUS, DEVICE, STORAGE MEDIUM, AND REMOTE CONTROLLER**
SCHLÜSSELSTEUERUNGSSCHALTUNG, VERFAHREN UND VORRICHTUNG, VORRICHTUNG, SPEICHERMEDIUM UND FERNSTEUERUNG
CIRCUIT, PROCÉDÉ ET APPAREIL DE COMMANDE DE CLÉ, DISPOSITIF, SUPPORT DE STOCKAGE ET TÉLÉCOMMANDE

(30) Priority: 06.07.2022 CN 202210798279
(43) Date of publication of application: 14.05.2025
(73) Proprietor: Gree Electric Appliances, Inc. of Zhuhai, Zhuhai, Guangdong 519070 (CN); Edgeless Semiconductor Co. Ltd. of Zhuhai, Zhuhai, Guangdong 519001 (CN)
(72) Inventor: LAN, Yang, Zhuhai, Guangdong 519070 (CN); HE, Ji, Zhuhai, Guangdong 519070 (CN); HE, Linfei, Zhuhai, Guangdong 519070 (CN); ZANG, Baiyong, Zhuhai, Guangdong 519070 (CN)
(74) Representative: Murgitroyd & Company
(86) International application number: PCT/CN2023/089297
(87) International publication number: WO 2024/007679

(56) References cited:
- CN-A- 102 505 415
- CN-A- 103 558 774
- CN-A- 106 292 341
- CN-A- 112 650 126
- CN-A- 113 098 097
- CN-A- 113 098 097
- CN-A- 113 568 360
- CN-A- 115 102 252

## Description

### TECHNICAL FIELD

The present disclosure relates to the field of electronic technologies, and in particular, to a button control circuit, method, a device, a storage medium, and a remote controller.

### BACKGROUND

A standby power consumption problem of a remote controller is always a focus and difficulty of product design. Currently, when the remote controller is not operated, a main control chip in the remote controller is in a standby state, and when the remote controller is operated, the main control chip in the remote controller is in a normal working state. A low power consumption requirement of the remote controller may be met by reducing a standby power consumption of the main control chip in the remote controller.

Although the standby power consumption of the main control chip is relatively low, a power consumption of the remote controller is still generated in the standby state. However, the power consumption often occupies a large proportion in a life cycle of a battery of the remote controller. Therefore, how to solve the standby power consumption problem will determine an overall service life of the battery of a battery-powered remote controller.

CN113098097A discloses an electrical device, a power supply system, and a control method therefor. The power supply system includes a battery, a button module, a power output module, and a control module. In an active state, the control module starts timing upon detecting that the button module outputs no button signal and no software tasks need to be executed, and outputs a lockout signal to the power output module after the preset time has elapsed. The power output module controls the battery to stop outputting electrical energy based on the lockout signal, thereby cutting off power to the control module, reducing standby current, extending battery life, and effectively improving the stability of the power supply system in standby mode.

### SUMMARY

The present disclosure provides a button control circuit, method, a device, a storage medium, and a remote controller, to resolve a problem that power consumption of a remote controller is relatively large when the remote controller is in a standby state.

According to a first aspect, the present disclosure provides a button control circuit, which includes a button module, a power module, a control module, and a power supply control module. The power supply control module is connected between the power module and the control module, a control terminal of the control module is connected to a controlled terminal of the power supply control module, and an output terminal of the button module is connected to an input terminal of the control module. The button module is connected in a path between the power module and the control module. The button module is configured to simultaneously turn on a path between the power module and the control module and a button encoded signal trigger path when the button module is operated, where the button encoded signal trigger path refers to a path between different input terminals of the control module, the path between the power module and the control module is configured to enable the power module to directly provide a power signal for the control module when being turned on, and the button encoded signal trigger path is configured to enable the button module to output a button encoded signal to the control module when being turned on. The control module is configured to start timing and output a first control signal to the power supply control module when obtaining the power signal in a power-off state, the first control signal being configured to control the power supply control module to be turned on, so as to supply power to the control module within a preset delay duration through the power module; and output a second control signal to the power supply control module when the button module is not operated within the preset delay duration, the second control signal being configured to control the power supply control module to be turned off, so that the power module stops supplying power to the control module.

Optionally, the control module is further configured to, when the button module is operated within the preset delay duration, receive a button encoded signal output by the button module, perform an operation corresponding to the button encoded signal, and restart timing.

Optionally, the power supply control module comprises a field effect transistor and a resistor. A first terminal of the power module is connected to a source electrode of the field effect transistor, and a second terminal of the power module is connected to a first terminal of the control module. A drain electrode of the field effect transistor is connected to a second terminal of the control module. The control terminal of the control module is connected to a gate electrode of the field effect transistor. A first terminal of the resistor is connected to the gate electrode of the field effect transistor, and a second terminal of the resistor is connected to the source electrode of the field effect transistor.

Optionally, the field effect transistor includes a p-channel metal oxide semiconductor (PMOS) transistor. The first terminal of the power module is a positive electrode, connected to the source electrode of the field effect transistor, and the second terminal of the power module is a negative electrode, connected to the first terminal of the control module, where the negative electrode of the power module is grounded, and the first terminal of the control module is a ground terminal.

Optionally, a first terminal of the button module is connected to the positive electrode of the power module, and a second terminal of the button module is connected to the second terminal of the control module, where the second terminal of the control module is a power terminal.

Optionally, the field effect transistor includes an n-channel metal oxide semiconductor (NMOS) transistor. The first terminal of the power module is a negative electrode, connected to the source electrode of the field effect transistor, and the second terminal of the power module is a positive electrode, connected to the first terminal of the control module, where the negative electrode of the power module is grounded, and the second terminal of the control module is a power terminal.

Optionally, a first terminal of the button module is connected to the negative electrode of the power module, and a second terminal of the button module is connected to the second terminal of the control module, where the second terminal of the control module is a ground terminal.

Optionally, the button module includes a button matrix circuit, a bottom structure of at least one button in the button matrix circuit is provided with a first portion and a second portion that arranged to be separated, and a printed circuit board which is in contact with the bottom structure of the at least one button is provided with four contacts. When the at least one button is pressed, two contacts of the four contacts are in contact with the first portion, so that the two contacts are turned on to turn on the path between the power module and the control module; another two contacts of the four contacts are in contact with the second portion, so that the another two contacts are turned on to turn on the button encoded signal trigger path, thereby turning on the path between the power module and the control module and the button encoded signal trigger path simultaneously.

According to a second aspect, the present disclosure provides a remote controller, which includes the button control circuit according to the first aspect.

According to a third aspect, the present disclosure provides a button control method applied to a control module in the button control circuit according to the first aspect. The method includes: starting timing and outputting a first control signal to a power supply control module when obtaining a power signal in a power-off state, where the first control signal is configured to control the power supply control module to be turned on, so as to supply power to the control module within a preset delay duration through a power module; and outputting a second control signal to the power supply control module when the button module is not operated within the preset delay duration, where the second control signal is configured to control the power supply control module to be turned off, so that the power module stops supplying power to the control module.

Optionally, the button control method further includes: when the button module is operated within the preset delay duration, receiving a button encoded signal output by the button module, performing an operation corresponding to the button encoded signal, and restarting timing.

According to a fourth aspect, the present disclosure provides an electronic device, which includes: a processor, a memory, and a communication bus. The processor and the memory communicate with each other through the communication bus. The memory is configured to store a computer program. The processor is configured to execute the program stored in the memory to implement the button control method according to the third aspect.

According to a fifth aspect, the present disclosure provides a computer-readable storage medium storing a computer program that, when executed by a processor, cause the processor to perform the button control method according to the third aspect.

Compared with a conventional technology, the above technical solution provided in the embodiments of the present disclosure has following advantages. A button control circuit provided in the embodiments of the present disclosure is provided with a power supply control module that is between a power module and a control module. The control module is in a power-off state during a standby state. When the button module is operated, a path between the power module and the control module and a button encoded signal trigger path can be turned on at the same time. The path between the power module and the control module can provide a power signal for the control module, and the button encoded signal trigger path can output a button encoded signal to the control module. Since the path between the power module and the control module and the button encoded signal trigger path are turned on at the same time, the control module is unable to receive the button encoded signal output by the button module when the button encoded signal trigger path is turned on. When the button module is operated, the path between the power module and the control module and the button encoded signal trigger path are turned on at the same time, so that the path between the power module and the control module and the button encoded signal trigger path do not interfere with each other, and an original function, outputting the button encoded signal to the control module, of the button module can be reserved.

When the control module obtains, in the power-off state, the power signal provided when the button module is operated, the control module controls the power supply control module to be turned on through a first control signal, so that the power module can supply power to the control module within the preset delay duration, to reserve the preset delay duration for the user. Therefore, after the control module is instantaneously energized, the user can have sufficient time to operate the button module to make the operation corresponding to the button encoded signal performed. Moreover, when the button module is not operated within the preset delay duration, the control module controls the power supply control module to be turned off through a second control signal, so that the power module stops supplying power to the control module, power is cut off in time, and power consumption of the control module is reduced. Therefore, zero power consumption of the control module in a standby state is achieved, and the problem that the power consumption of the remote controller is relatively large in the standby state is solved.

### BRIEF DESCRIPTION OF THE DRAWINGS

The accompanying drawings are incorporated into the specification and constitute a part of this specification, illustrating embodiments of the present disclosure and being configured to explain the principles of the present disclosure together with the description.

In order to more clearly illustrate the embodiments of the present disclosure or the technical solutions in the conventional technology, the drawings required in the description of the embodiments or the conventional technology will be briefly described below, and it is obvious to those skilled in the art that other drawings may be obtained according to these drawings without creative efforts.
FIG. 1 is a schematic structural diagram of a button control circuit according to an embodiment of the present disclosure.
FIG. 2 is a schematic structural diagram of a button control circuit according to a specific embodiment of the present disclosure.
FIG. 3 is a schematic structural diagram of a button module according to a specific embodiment of the present disclosure.
FIG. 4 is a schematic structural diagram of a button matrix circuit in a conventional technology.
FIG. 5 is a schematic structural diagram of a button module according to another specific embodiment of the present disclosure.
FIG. 6 is a schematic structural diagram of a button control circuit according to another specific embodiment of the present disclosure.
FIG. 7 is a schematic structural diagram of a button module according to another specific embodiment of the present disclosure.
FIG. 8 is a schematic diagram of a button according to a specific embodiment of the present disclosure.
FIG. 9 is a schematic diagram of a printed circuit board in contact with a bottom structure of a button according to a specific embodiment of the present disclosure.
FIG. 10 is a schematic flowchart of a button control method according to an embodiment of the present disclosure.
FIG. 11 is a schematic structural diagram of a button control apparatus according to an embodiment of the present disclosure.
FIG. 12 is a schematic structural diagram of an electronic device according to an embodiment of the present disclosure.

### DETAILED DESCRIPTION OF THE EMBODIMENTS

In order to make the objectives, technical solutions, and advantages of the embodiments of the present disclosure clearer, the following clearly and completely describes the technical solutions in the embodiments of the present disclosure with reference to the accompanying drawings in the embodiments of the present disclosure. Obviously, the described embodiments are a portion of the embodiments of the present disclosure and not all of the embodiments. All other embodiments obtained by those skilled in the art based on the embodiments of the present disclosure without creative efforts shall fall within the protection scope of the present disclosure.

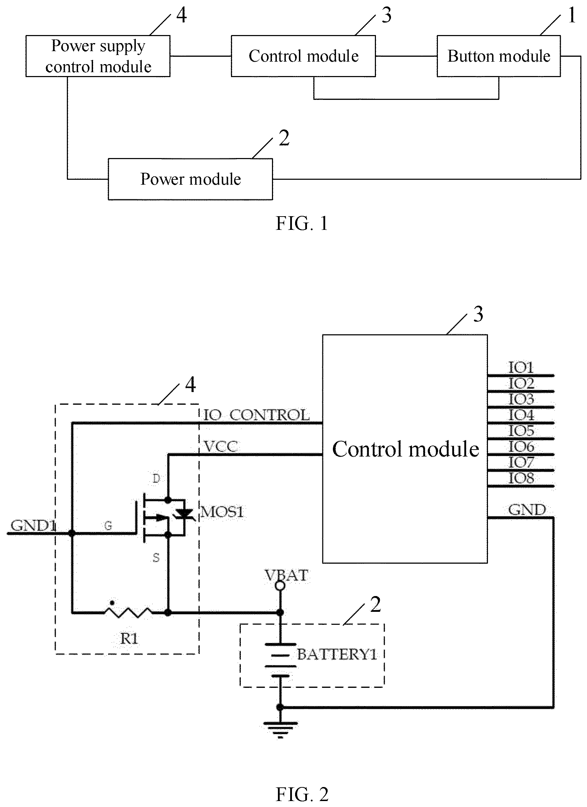

A button control circuit is provided according to an embodiment of the present disclosure. As shown in FIG. 1, the button control circuit includes a button module 1, a power module 2, a control module 3, and a power supply control module 4.

The power supply control module 4 is connected between the power module 2 and the control module 3. A control terminal of the control module 3 is connected to a controlled terminal of the power supply control module 4. An output terminal of the button module 1 is connected to an input terminal of the control module 3.

The output terminal of the button module 1 is connected to the input terminal of the control module 3, without changing a connection relationship between each button in the button module 1 and the control module 3, and without affecting the output button encoded signal of the button module, so as to realize a function of each button in the button module.

The button module 1 is configured to simultaneously turn on a path between the power module 2 and the control module 3 and a button encoded signal trigger path when the button module 1 is operated. The button encoded signal trigger path refers to a path between different input terminals of the control module 3. The path between the power module 2 and the control module 3 is configured to provide a power signal for the control module 3. The button encoded signal trigger path is configured to output a button encoded signal to the control module 3.

For example, a first output terminal of the button module 1 is connected to a first input terminal IO1 of the control module 3, a second output terminal of the button module 1 is connected to a second input terminal IO5 of the control module 3. The button encoded signal trigger path refers to a path between IO1 and IO5. When the button module 1 is operated, the path between the power module 2 and the control module 3 and the path between IO1 and IO5 are simultaneously turned on. Since the path between the power module and the control module and the button encoded signal trigger path are simultaneously turned on, the control module is unable to receive the button encoded signal output by the button module when the button encoded signal trigger path is turned on.

When the button module is operated, it may be that at least one button in the button module is pressed. When the button module is operated, the power supply control module is instantaneously turned on or short-circuited, so that the path between the power module and the control module is turned on, to provide an instantaneous power signal for the control module and make the control module be instantaneously energized.

The control module 3 is configured to start timing and output a first control signal to the power supply control module 4 when obtaining the power signal in a power-off state. The first control signal is configured to control the power supply control module 4 to be turned on, so as to supply power to the control module 3 within a preset delay duration through the power module 2. When the button module 1 is not operated within the preset delay duration, the control module 3 outputs a second control signal to the power supply control module 4. The second control signal is configured to control the power supply control module 4 to be turned off, so that the power module 2 stops supplying power to the control module 3.

The preset delay duration is a set duration between a moment when the button module is operated and a moment when the control module is power-off automatically. Different preset delay durations may be set according to usage habits of different remote controllers.

The control module 3 at least includes a button detection control module. The button detection control module can receive the button encoded signal output by the button module, and execute an operation corresponding to the button encoded signal to implement a normal function of the button module. The control module 3 may further include other modules according to a type of the remote controller. For example, the control module 3 may further include an infrared transmitting module of an infrared remote controller, a Bluetooth module of a Bluetooth remote controller, a liquid crystal display module of an air conditioner remote controller, a radio frequency transmitting module of a radio frequency remote controller, and the like. A power consumption of the remote controller in a standby state is further reduced.

By providing the power supply control module between the power module and the control module, the control module is in a power-off state during a standby state, and when the button module is operated, the path between the power module and the control module and the button encoded signal trigger path can be turned on simultaneously. The path between the power module and the control module can provide power signal for the control module, and the button encoded signal trigger path can output the button encoded signal to the control module. Since the path between the power module and the control module and the button encoded signal trigger path are turned on simultaneously, the control module is unable to receive the button encoded signal output by the button module when the button encoded signal trigger path is turned on. When the button module is operated, the path between the power module and the control module and the button encoded signal trigger path are turned on simultaneously, so that the path between the power module and the control module and the button encoded signal trigger path do not interfere with each other, and an original function, outputting the button encoded signal to the control module, of the button module can be reserved.

When the control module obtains, in the power-off state, the power signal provided when the button module is operated, the control module controls the power supply control module to be turned on through the first control signal, so that the power module can supply power to the control module within the preset delay duration, to reserve the preset delay duration for the user. Therefore, after the control module is instantaneously energized, the user can have sufficient time to operate the button module, to make the operation corresponding to the button encoded signal performed. Moreover, when the button module is not operated within the preset delay duration, the control module controls the power supply control module to be turned off through the second control signal, so that the power module stops supplying power to the control module, power is cut off in time, and power consumption of the control module is reduced. Therefore, zero power consumption of the control module in a standby state is achieved, and the problem that the power consumption of the remote controller is relatively large in the standby state is solved.

In a specific embodiment, the control module 3 is further configured to, when the button module 1 is operated within the preset delay duration, receive the button encoded signal output by the button module 1, perform an operation corresponding to the button encoded signal, and restart timing.

A normal function of the button module can be implemented. For example, within the preset delay duration, a volume increase button in the button module is pressed, and the control module performs a volume increase operation. A preset duration is reserved for the user, so that after the control module is instantaneously energized, the user can have sufficient time to operate the button module to make the operation corresponding to the button encoded signal performed.

Moreover, when the button module is operated within the preset delay duration, the control module restarts timing, so that the control module can be prevented from being powered off due to a fact that a duration between a moment when the button module is operated subsequently and a moment when the control module is instantaneously energized in a power-off state is greater than the preset delay duration in the process of the button module being operated multiple times, which need to re-operate the button module to enable the control module to be instantaneously energized, and operate the button module again to execute the operation corresponding to the button encoded signal, increasing operation steps, and affecting an use experience of the user.

In a specific embodiment, the power supply control module includes a field effect transistor and a resistor.

A first terminal of the power module is connected to a source electrode of the field effect transistor. A second terminal of the power module is connected to a first terminal of the control module. A drain electrode of the field effect transistor is connected to a second terminal of the control module. A control terminal of the control module is connected to a gate electrode of the field effect transistor. A first terminal of the resistor is connected to the gate electrode of the field effect transistor. A second terminal of the resistor is connected to the source electrode of the field effect transistor.

The field effect transistor is in a turned off state at a normal state, so that the control module is in a power-off state during a standby state, and zero power consumption of the control module in the standby state is achieved. The control terminal of the control module is connected to the gate electrode of the field effect transistor, and the field effect transistor is controlled to be turned on through the first control signal, which makes the control module keep an energized state to work normally. The field effect transistor is controlled to be turned off through the second control signal, which makes the control module to be powered off.

Specifically, the field effect transistor may be a field effect transistor with a turn-on voltage being less than a supply voltage of the power module and with extremely low on-resistance characteristics.

The first terminal of the resistor is connected to the gate electrode of the field effect transistor, and the second terminal of the resistor is connected to the source electrode of the field effect transistor, which can make the field effect transistor in a turned off state at a normal state, and also play a role in current limiting when the field effect transistor is turned on.

The power supply control module is added to an existing button control circuit, and the power supply control module includes the field effect transistor and the resistor, so that the number of newly added electronic components is small and a cost is low.

In a specific embodiment, as shown in FIG. 2, a power supply control module 4 includes a field effect transistor and a resistor R1, the field effect transistor is a PMOS transistor MOS1. In FIG. 2, the power module 2 is represented by BATTERY1, which represents the power module 2 is a battery. In FIG. 2, a gate electrode G of the field effect transistor MOS1 is represented by GND1.

A positive electrode VBAT of the power module 2 is connected to a source electrode S of the field effect transistor MOS1. A negative electrode of the power module 2 is connected to a first terminal GND of the control module 3. The negative electrode of the power module 2 is grounded. A drain electrode D of the field effect transistor MOS1 is connected to a second terminal VCC of the control module 3. A control terminal IO CONTROL of the control module 3 is connected to the gate electrode G of the field effect transistor MOS1. A first terminal of the resistor R1 is connected to the gate electrode G of the field effect transistor MOS1. A second terminal of the resistor R1 is connected to the source electrode S of the field effect transistor MOS1. In FIG. 2, IO1 to IO8 are input terminals of the control module 3, and are configured to be connected to an output terminal of a button module 1. The number of the input terminals of the control module 3 in FIG. 2 is only illustrative and does not limit a specific number of input terminals of the control module 3.

In a standby state, the PMOS transistor MOS1 is in a turned off state, and a connection between the positive electrode VBAT of the power module 2 and the second terminal VCC of the control module 3 is cut off through the PMOS transistor MOS1, so that the control module is in a power-off state during the standby state, and zero power consumption of the control module in the standby state is achieved.

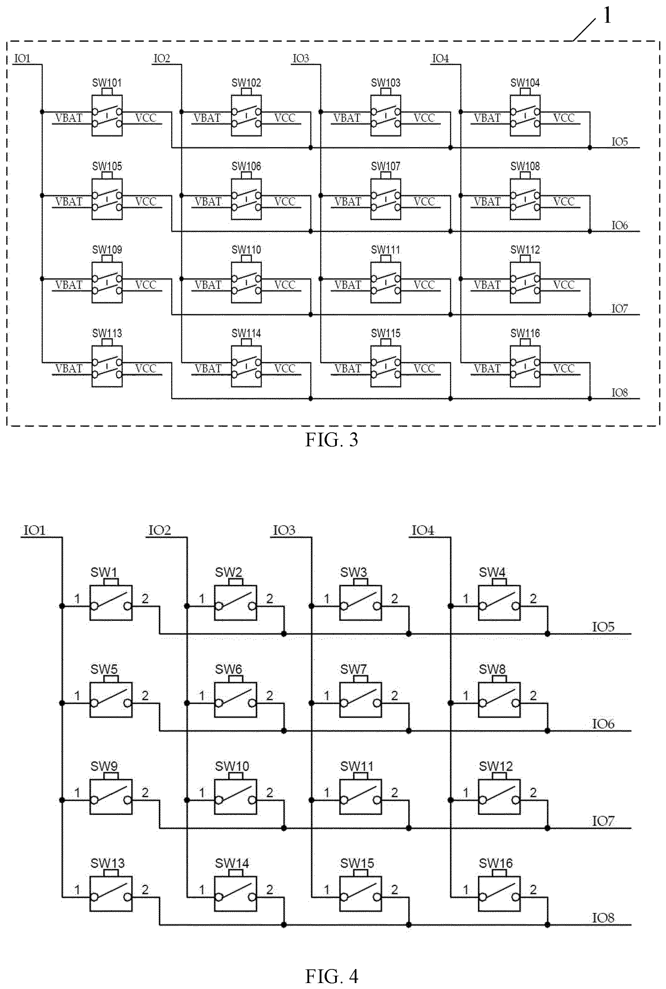

In a specific embodiment, as shown in FIG. 2 and FIG. 3, a first terminal of the button module 1 is connected to the positive electrode VBAT of the power module 2, and a second terminal of the button module 1 is connected to the second terminal VCC of the control module 3. In FIG. 3, the button module 1 is a button matrix circuit and includes 16 buttons, i.e., SW101 to SW116. The IO1 to IO8 are input terminals of the control module 3, which are configured to be connected to an output terminal of the button module 1. Triggers of functions of the 16 different buttons are realized through the 8 input terminals of the control module 3, which can save the number of input terminals of the control module 3. In FIG. 3, the number of the input terminals of the control module 3 is only schematic, and a specific number of the input terminals of the control module 3 is not limited. The number of the buttons is only schematic, and a specific number of the buttons is not limited.

In FIG. 3, a first terminal of each button is connected to the positive electrode VBAT of the power module 2, and a second terminal of each button is connected to the second terminal VCC of the control module 3. A function of pressing any button to wake up a remote controller can be achieved. According to needs, it is not necessary to add the first terminal and the second terminal for each button, while the first terminal of each button is connected to the positive electrode VBAT of the power module 2, and the second terminal of each button is connected to the second terminal VCC of the control module 3. As long as at least one of the buttons of the button module 1 is added with the first terminal and the second terminal, while the first terminal is connected to the positive electrode VBAT of the power module 2 and the second terminal is connected to the second terminal VCC of the control module 3, it can realize that when the button module is operated, a path between the power module and the control module is turned on, to provide an instantaneous power signal for the control module, and make the control module be instantaneously energized.

In FIG. 3, when the button module is operated, a path between the positive electrode VBAT of the power module 2 and the second terminal VCC of the control module 3 is directly turned on, and the control module is instantaneously energized. After the control module is instantaneously energized, the control module outputs a first control signal to a gate electrode G of the field effect transistor MOS1. The first control signal is at a low level, the field effect transistor MOS1 is turned on, and the control module is maintained in a state of being energized.

On a basis of FIG. 2 and FIG. 3, after the control module is instantaneously energized, the control module outputs the first control signal to the gate electrode G of the field effect transistor MOS1. The first control signal is at a low level. The field effect transistor MOS1 is turned on. The control module is maintained in a state of being energized within a preset delay duration, receives a button encoded signal output by the button module, performs an operation corresponding to the button encoded signal, and restarts timing. When the button module is not operated within the preset delay duration, the control module outputs a second control signal to the gate electrode G of the field effect transistor MOS1. The second control signal is at a high level, the field effect transistor MOS1 is turned off, and the control module is powered off and enters a standby mode without power consumption.

In FIG. 3, an explanation is illustrated with a button SW101 being pressed. When the button SW101 is pressed, a path between IO1 and IO5 and a path between the positive electrode VBAT of the power module 2 and the second terminal VCC of the control module 3 are instantaneously turned on at a same time. When the path between the positive electrode VBAT of the power module 2 and the second terminal VCC of the control module 3 is turned on, the control module is instantaneously energized. When the path between IO1 and IO5 is turned on, a button encoded signal corresponding to the button SW101 is output. The control module can only receive the button encoded signal corresponding to the button SW101 after the control module is energized. However, when the two paths are turned on at the same time, the control module is unable to receive the button encoded signal corresponding to the button SW101, so as to avoid the control module mistakenly executing operations corresponding to the button encoded signal when the button SW101 is pressed to make the control module to be energized.

The applicant finds that in the conventional technology, as shown in FIG. 4, a button matrix circuit includes 16 buttons, i.e., SW1 to SW16, and IO1 to IO8 are input terminals of the control module, which are configured to be connected to an output terminal of the button matrix circuit. Triggers of functions of the 16 different buttons are realized by the 8 input terminals of the control module, which can save the number of input terminals of the control module. However, a bottom structure of each button in SW1 to SW16 is an integral structure, and a printed circuit board which is in contact with each button is provided with two contacts. When the button is pressed, the two contacts are in contact with the bottom structure of the button to achieve a conduction between the two contacts, so that only the button encoded signal corresponding to the button can be output, and the control module cannot be energized instantaneously.

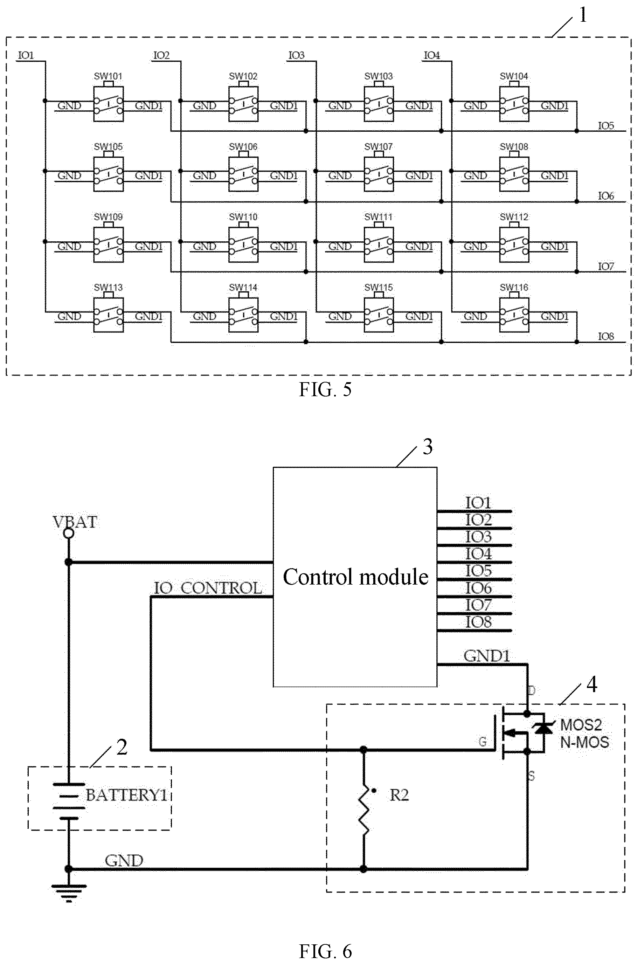

In a specific embodiment, as shown in FIG. 2 and FIG. 5, the first terminal of the button module 1 is connected to the gate electrode G of the field effect transistor MOS1. The gate electrode G of the field effect transistor MOS1 is represented by GND1. The second terminal of the button module 1 is connected to a negative electrode GND of the power module 2. In FIG. 5, the button module 1 is a button matrix circuit and includes 16 buttons, i.e., SW101 to SW116. IO1 to IO8 are input terminals of the control module 3, which are configured to be connected to an output terminal of the button module 1. Triggers of functions of the 16 different buttons are realized by the 8 input terminals of the control module 3, which can save the number of input terminals of the control module 3. In FIG. 5, the number of the input terminals of the control module 3 is only schematic, and a specific number of the input terminals of the control module 3 is not limited. The number of the buttons is only schematic, and a specific number of the buttons is not limited.

In FIG. 5, the first terminal of each button is connected to the gate electrode G of the field effect transistor MOS1, and a second terminal of each button is connected to the negative electrode GND of the power module 2. A function of pressing any button to wake up a remote controller can be achieved. According to needs, it is not necessary to add the first terminal and the second terminal for each button, while the first terminal of each button is connected to the gate electrode G of the field effect transistor MOS1, and the second terminal of each button is connected to the negative electrode GND of the power module 2. As long as at least one of the buttons of the button module 1 is added with the first terminal and the second terminal, while the first terminal is connected to the gate electrode G of the field effect transistor MOS1 and the second terminal is connected to the negative electrode GND of the power module 2, it can realize that when the button module is operated, the power supply control module is instantaneously turned on and a path between the power module and the control module is turned on, to provide an instantaneous power signal for the control module, and make the control module be instantaneously energized.

In FIG. 5, when the button module is operated, a path between the negative electrode GND of the power module 2 and the gate electrode G of the field effect transistor MOS1 is directly turned on, the field effect transistor MOS1 is instantaneously turned on, then the control module is instantaneously energized. After the control module is instantaneously energized, the control module outputs a first control signal to the gate electrode G of the field effect transistor MOS1. The first control signal is at a low level, the field effect transistor MOS1 is turned on, and the control module is maintained in a state of being energized.

On a basis of FIG. 2 and FIG. 5, after the control module is instantaneously energized, the control module outputs the first control signal to the gate electrode G of the field effect transistor MOS1. The first control signal is at a low level. The field effect transistor MOS1 is turned on. The control module is maintained in a state of being energized within a preset delay duration, receives a button encoded signal output by the button module, performs an operation corresponding to the button encoded signal, and restarts timing. When the button module is not operated within the preset delay duration, the control module outputs a second control signal to the gate electrode G of the field effect transistor MOS1. The second control signal is at a high level, the field effect transistor MOS1 is turned off, and the control module is powered off and enters a standby mode without power consumption.

In FIG. 5, an explanation is illustrated with a button SW101 being pressed. When the button SW101 is pressed, a path between IO1 and IO5 and a path between the negative electrode GND of the power module 2 and the gate electrode G of the field effect transistor MOS1 are instantaneously turned on at a same time. When the path between the negative electrode GND of the power module 2 and the gate electrode G of the field effect transistor MOS1 is turned on, the control module is instantaneously energized. When the path between IO1 and IO5 is turned on, the button encoded signal corresponding to the button SW101 is output. The control module can only receive the button encoded signal corresponding to the button SW101 after the control module is energized. However, when the two paths turned on at the same time, the control module is unable to receive the button encoded signal corresponding to the button SW101, so as to avoid the control module mistakenly executing operations corresponding to the button encoded signal when the button SW101 is pressed to make the control module to be energized.

In a specific embodiment, as shown in FIG. 6, a power supply control module 4 includes a field effect transistor and a resistor R2, and the field effect transistor is an NMOS transistor MOS2. In FIG. 6, a power module 2 is represented by BATTERY1, which represents the power module 2 is a battery.

A negative electrode GND of the power module 2 is connected to a source electrode S of the field effect transistor MOS2, the negative electrode of the power module 2 is grounded, and a positive electrode VBAT of the power module 2 is connected to a first terminal of a control module 3. A drain electrode D of the field effect transistor MOS2 is connected to a second terminal GND1 of the control module 3. A control terminal 10 CONTROL of the control module 3 is connected to a gate electrode G of the field effect transistor MOS2. A first terminal of the resistor R2 is connected to the gate electrode G of the field effect transistor MOS2. A second terminal of the resistor R2 is connected to the source electrode S of the field effect transistor MOS2. In FIG. 6, IO1 to IO8 are input terminals of the control module 3, which is configured to be connected to an output terminal of a button module 1. The number of the input terminals of the control module 3 in FIG. 6 is only schematic, and a specific number of the input terminals of the control module 3 is not limited.

In a standby state, the NMOS transistor MOS2 is in a turned off state, and a connection between the negative electrode GND of the power module 2 and the second terminal GND1 of the control module 3 is cut off through the NMOS transistor MOS2, so that the control module is in a power-off state during the standby state, and zero power consumption of the control module in the standby state is achieved.

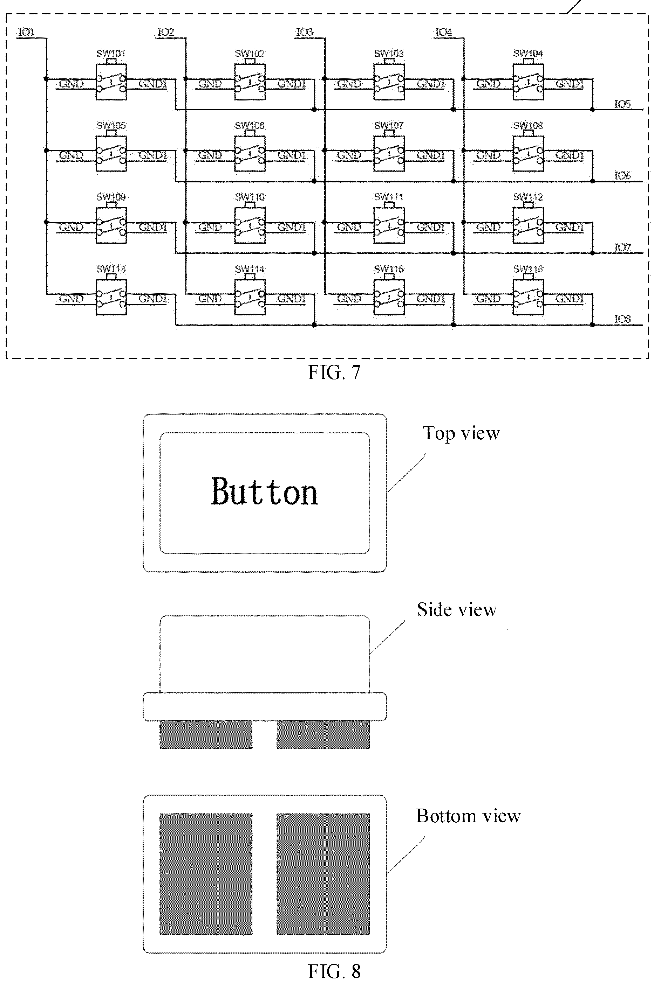

In a specific embodiment, as shown in FIG. 6 and FIG. 7, a first terminal of the button module 1 is connected to the negative electrode GND of the power module 2, and a second terminal of the button module is connected to the second terminal GND1 of the control module 3. In FIG. 7, the button module 1 is a button matrix circuit, the button module 1 includes 16 buttons, i.e., SW101 to SW116. IO1 to IO8 are input terminals of the control module 3, which are configured to be connected to the output terminal of the button module 1. Triggers of functions of the 16 different buttons are realized by the 8 input terminals of the control module 3, which can save the number of input terminals of the control module 3. In FIG. 7, the number of the input terminals of the control module 3 is only schematic, and a specific number of the input terminals of the control module 3 is not limited. The number of the buttons is only schematic, and a specific number of the buttons is not limited.

In FIG. 7, a first terminal of each button is connected to the negative electrode GND of the power module 2, and a second terminal of each button is connected to the second terminal GND1 of the control module 3. A function of pressing any button to wake up a remote controller can be achieved. According to needs, it is not necessary to add the first terminal and the second terminal for each button, while the first terminal of each button is connected to the negative electrode GND of the power module 2, and the second terminal of each button is connected to the second terminal GND1 of the control module 3. As long as at least one of the buttons of the button module 1 is added with the first terminal and the second terminal, while the first terminal is connected to the negative electrode GND of the power module 2 and the second terminal is connected to the second terminal GND1 of the control module 3, it can realize that when the button module is operated, a path between the power module and the control module is turned on, to provide an instantaneous power signal for the control module, and make the control module be instantaneously energized.

In FIG. 7, when the button module is operated, a path between the negative electrode GND of the power module 2 and the second terminal GND1 of the control module 3 is directly turned on, and the control module is instantaneously energized. After the control module is instantaneously energized, the control module outputs a first control signal to a gate electrode G of the field effect transistor MOS2. The first control signal is at a high level, the field effect transistor MOS2 is turned on, and the control module is maintained in a state of being energized.

On a basis of FIG. 6 and FIG. 7, after the control module is instantaneously energized, the control module outputs the first control signal to the gate electrode G of the field effect transistor MOS2. The first control signal is at a high level. The field effect transistor MOS2 is turned on. The control module is maintained in a state of being energized within a preset delay duration, receives a button encoded signal output by the button module, performs an operation corresponding to the button encoded signal, and restarts timing. When the button module is not operated within the preset delay duration, the control module outputs a second control signal to the gate electrode G of the field effect transistor MOS2. The second control signal is at a low level, the field effect transistor MOS2 is turned off, and the control module is powered off and in a standby mode without power consumption.

In FIG. 7, an explanation is illustrated with a button SW101 being pressed. When the button SW101 is pressed, a path between IO1 and IO5 and a path between the negative electrode GND of the power module 2 and the second terminal GND1 of the control module 3 are instantaneously turned on at a same time. When the path between the negative electrode GND of the power module 2 and the second terminal GND1 of the control module 3 is turned on, the control module is instantaneously energized. When the path between IO1 and IO5 is turned on, the button encoded signal corresponding to the button SW101 is output. The control module can only receive the button encoded signal corresponding to the button SW101 after the control module is energized. However, when the two paths turned on at the same time, the control module is unable to receive the button encoded signal corresponding to the button SW101, so as to avoid the control module mistakenly executing operations corresponding to the button encoded signal when the button SW101 is pressed to make the control module to be energized.

In a specific embodiment, the button module includes a button matrix circuit. The number of buttons in the button matrix circuit is greater than the number of output terminals of the button matrix circuit. As shown in FIG. 3, the button module 1 is a button matrix circuit and includes 16 buttons, i.e., SW101 to SW116. IO1 to IO8 are input terminals of the control module 3, which are configured to be connected to an output terminal of the button module 1. Triggers of functions of the 16 different buttons are realized by the 8 input terminals of the control module 3, and the number of buttons in the button matrix circuit is greater than the number of output terminals of the button matrix circuit, which can save the number of input terminals of the control module 3. In FIG. 3, the number of the input terminals of the control module 3 is only schematic, and a specific number of the input terminals of the control module 3 is not limited. The number of the buttons is only schematic, and a specific number of the buttons is not limited.

A bottom structure of at least one button in the button matrix circuit is provided with a first portion and a second portion that arranged to be separated, and a printed circuit board which is in contact with the bottom structure of the at least one button is provided with four contacts. When the at least one button is pressed, two contacts of the four contacts are in contact with the first portion, so that the two contacts are turned on to turn on the path between the power module and the control module; and another two contacts of the four contacts are in contact with the second portion, so that the another two contacts are turned on to turn on the button encoded signal trigger path, thereby turning on the path between the power module and the control module and the button encoded signal trigger path simultaneously.

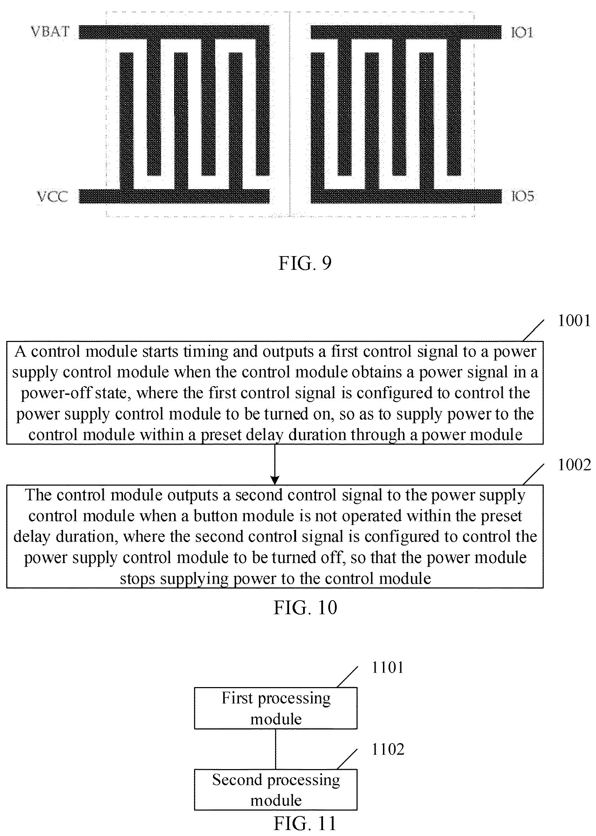

As shown in FIG. 8, a top view, a side view, and a bottom view of the button are shown. There is a word "Button" on the top view. According to the side view and the bottom view, the bottom structure of the button has a first portion and a second portion that arranged to be separated. A lower surface of the first portion is provided with a graphite coating, a lower surface of the second part is provided with a graphite coating, and an electrical conduction between contacts on the printed circuit board is realized through the graphite coating. As shown in FIG. 9, a printed circuit board which is in contact with the bottom structure of the button is provided with four contacts VBAT, VCC, IO1 and IO5, and the printed circuit board which is in contact with the bottom structure of the button is provided with an exposed copper foil with a comb structure. The contact VBAT and the contact VCC correspond to a pair of comb cross-winding which is formed by two comb windings, and the contacts IO1 and the contacts IO5 correspond to a pair of comb cross-winding which is formed by two comb windings. Two pairs of comb cross-windings are formed by the four contacts, and the two pairs of comb cross-winding do not interfere with each other.

In the conventional technology, a design of a remote controller does not need to mount a physical button on a printed circuit board, but only need to design an exposed copper foil with a comb structure on the printed circuit board, so that an electrical conduction is achieved through a graphite coating that located on a lower surface of a colloid button when a one-piece rebound colloid button on a top of the exposed copper foil is pressed. In the conventional technology, a bottom structure of the button is arranged as an integral structure, the graphite coating on the lower surface of the colloid button is also an entirety, the printed circuit board which is in contact with the bottom structure of the button is provided with two contacts, which correspond to a pair of comb cross-winding formed by two comb windings, and only a conduction between two contacts can be achieved. However, in FIG. 8 and FIG. 9, the bottom structure of the button is provided with a first portion and a second portion that arranged to be separated, and the printed circuit board which is in contact with the bottom structure of the button is provided with four contacts, so that one button can control four contacts to turn on two paths. In FIG. 8 and FIG. 9, when the button is pressed, the contact VBAT and the contact VCC are turned on to turn on the path between the power module and the control module, the contact IO1 and the contact IO5 are turned on to turn on the button encoded signal trigger path, so that the path between the power module and the control module and the button encoded signal trigger path are turned on simultaneously. The path between the contact VBAT and the contact VCC does not interfere with the path between the contact IO1 and the contact 105, thereby implementing a one-button dual-control function. Moreover, FIG. 8 and FIG. 9 only change a shape of the bottom structure of the button and a shape of a contact copper foil on the printed circuit board, and do not increase a material cost.

Based on a same concept, a remote controller is provided according to embodiments of the present disclosure. The remote controller includes the button control circuit provided in the embodiments of the present disclosure.

Based on a same concept, a button control method is provided according to embodiments of the present disclosure. The button control method is applied to the control module in the button control circuit provided in embodiments of the present disclosure. As shown in FIG. 10, the button control method mainly includes the following contents.

In Step 1001, the control module starts timing and outputs a first control signal to a power supply control module when the control module obtains a power signal in a power-off state, where the first control signal is configured to control the power supply control module to be turned on, so as to supply power to the control module within a preset delay duration through a power module.

The preset delay duration is a set duration between a moment when the button module is operated and a moment when the control module is power-off automatically. Different preset delay durations may be set according to usage habits for different remote controllers.

Step 1002: the control module outputs a second control signal to the power supply control module when a button module is not operated within the preset delay duration, where the second control signal is configured to control the power supply control module to be turned off, so that the power module stops supplying power to the control module.

When the control module obtains, in the power-off state, the power signal provided when the button module is operated, the control module controls the power supply control module to be turned on through the first control signal, so that the power module can supply power to the control module within the preset delay duration, to reserve the preset delay duration for the user. Therefore, after the control module is instantaneously energized, the user can have sufficient time to operate the button module, to make the operation corresponding to the button encoded signal performed. Moreover, when the button module is not operated within the preset delay duration, the control module controls the power supply control module to be turned off through the second control signal, so that the power module stops supplying power to the control module, power is cut off in time, and power consumption of the control module is reduced. Therefore, zero power consumption of the control module in a standby state is achieved, and the problem that the power consumption of the remote controller is relatively large in the standby state is solved.

In a specific embodiment, the button control method further includes: when the button module is operated within the preset delay duration, the control module receives a button encoded signal output by the button module, performs an operation corresponding to the button encoded signal, and restarts timing.

A normal function of the button module can be implemented. For example, within the preset delay duration, a volume increase button in the button module is pressed, and the control module performs a volume increase operation. A preset duration is reserved for the user, and after the control module is instantaneously energized, the user can have sufficient time to operate the button module, to make the operation corresponding to the button encoded signal performed.

Moreover, when the button module is operated within the preset delay duration, the control module restarts timing, so that the control module can be prevented from being powered off due to a fact that a duration between a moment when the button module is operated subsequently and a moment when the control module is instantaneously energized in a power-off state is greater than the preset delay duration in the process of the button module being operated multiple times, which need to re-operate the button module to enable the control module to be instantaneously energized, and operate the button module again to execute the operation corresponding to the button encoded signal, increasing operation steps, and affecting an use experience of the user.

Based on a same concept, a button control apparatus is provided according to embodiments of the present disclosure. The button control apparatus is configured in the control module in the button control circuit provided according to embodiments of the present disclosure. For a specific implementation of the button control apparatus, please refer to the description of the embodiments for the button control method, and details are not described herein again. As shown in FIG. 11, the button control apparatus mainly includes a first processing module 1101 and a second processing module 1102.

The first processing module 1101 is configured to start timing and output a first control signal to a power supply control module when obtaining a power signal in a power-off state, where the first control signal is configured to control the power supply control module to be turned on, so as to supply power to the control module within a preset delay duration through a power module.

The second processing module 1102 is configured to output a second control signal to the power supply control module when a button module is not operated within the preset delay duration, where the second control signal is configured to control the power supply control module to be turned off, so that the power module stops supplying power to the control module.

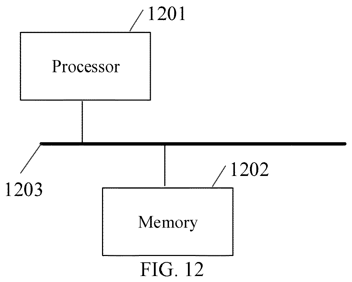

Based on a same concept, an electronic device is further provided according to embodiments of the present disclosure. As shown in FIG. 12, the electronic device mainly includes a processor 1201, a memory 1202, and a communications bus 1203. The processor 1201 and the memory 1202 communicate with each other through the communications bus 1203. The memory 1202 stores a program that can be executed by the processor 1201, and the processor 1201 is configured to execute the program stored in the memory 1202 to implement the following steps: starting timing and outputting a first control signal to a power supply control module when obtaining a power signal in a power-off state, where the first control signal is configured to control the power supply control module to be turned on, so as to supply power to the control module within a preset delay duration through a power module; outputting a second control signal to the power supply control module when a button module is not operated within the preset delay duration, where the second control signal is configured to control the power supply control module to be turned off, so that the power module stops supplying power to the control module.

The communication bus 1203 mentioned in the electronic device may be a Peripheral Component Interconnect (PCI) bus or an Extended Industry Standard Architecture (EISA) bus, or the like. The communications bus 1203 may be classified into an address bus, a data bus, a control bus, and the like. For ease of representation, only one thick line is used to represent the bus in FIG. 12, but it does not mean that there is only one bus or one type of bus.

The memory 1202 may include a Random Access Memory (RAM), or may include a nonvolatile Memory, for example, at least one magnetic disk memory. Optionally, the memory may also be at least one storage apparatus located away from the processor 1201.

The processor 1201 may be a general-purpose processor, including a Central Processing Unit (CPU), a Network Processor (NP), or the like, or may be a Digital Signal Processing (DSP), an Application Specific Integrated Circuit (ASIC), a Field-Programmable Gate Array (FPGA) or another programmable logic device, a discrete gate or a transistor logic device, or a discrete hardware component.

In another embodiment of the present disclosure, a computer-readable storage medium is further provided, where a computer program is stored in the computer-readable storage medium, and when the computer program runs on a computer, the computer is enabled to perform the button control method described in the foregoing embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, computer instructions are transmitted from a website, a computer, a server, or a data center to another website, computer, server, or data center in a wired (for example, coaxial cable, optical fiber, Digital Subscriber Line (DSL)), or wireless (for example, infrared, microwave, and the like) manner. The computer-readable storage medium may be any usable medium accessible by a computer, or a data storage device including a server or a data center that may be integrated through one or more usable mediums. The usable medium may be a magnetic medium (for example, a floppy disk, a hard disk, or a magnetic tape), an optical medium (for example, a Digital Video Disk (DVD)), a semiconductor medium (for example, a solid-state disk), or the like.

It should be noted that, in this specification, relational terms such as "first" and "second" are merely used to distinguish one entity or operation from another entity or operation, and do not necessarily require or imply that any actual relationship or sequence exists between these entities or operations. Moreover, the terms "comprising", "including", or any other variation thereof are intended to cover a non-exclusive inclusion, so that a process, method, article, or device that includes a series of elements includes not only those elements, but also other elements that are not explicitly listed, or elements inherent to such a process, method, article, or device. Without further limitation, an element limited by the statement "including one" does not exclude the existence of another identical element in the process, method, article or device that includes the foregoing statement.

The foregoing descriptions are merely specific implementations of the present disclosure, to enable those skilled in the art to understand or implement the present disclosure. Various modifications to these embodiments will be apparent to those skilled in the art, and the present disclosure will not be limited to the embodiments shown herein but is to be accorded the widest scope consistent with the principles and novel features disclosed herein.

## Claims

1. A button control circuit, **characterized by**, comprising: a button module (1), a power module (2), a control module (3), and a power supply control module (4);
wherein the power supply control module (4) is connected between the power module (2) and the control module (3), a control terminal of the control module (3) is connected to a controlled terminal of the power supply control module (4), and an output terminal of the button module (1) is connected to an input terminal of the control module (3); the button module (1) is connected in a path between the power module (2) and the control module (3);
the button module (1) is configured to simultaneously turn on the path between the power module (2) and the control module (3) and a button encoded signal trigger path when the button module (1) is operated, wherein the button encoded signal trigger path refers to a path between different input terminals of the control module (3), the path between the power module (2) and the control module (3) is configured to enable the power module (2) to directly provide a power signal to the control module (3) when being turned on, and the button encoded signal trigger path is configured to enable the button module (1) to output a button encoded signal to the control module (3) when being turned on; and
the control module (3) is configured to start timing and output a first control signal to the power supply control module (4) when obtaining the power signal in a power-off state, the first control signal being configured to control the power supply control module (4) to be turned on, so as to supply power to the control module (3) within a preset delay duration through the power module (2); and output a second control signal to the power supply control module (4) when the button module (1) is not operated within the preset delay duration, the second control signal being configured to control the power supply control module (4) to be turned off, so that the power module (2) stops supplying power to the control module (3).

2. The button control circuit according to claim 1, wherein the control module (3) is further configured to, when the button module (1) is operated within the preset delay duration, receive a button encoded signal output by the button module (1), perform an operation corresponding to the button encoded signal, and restart timing.

3. The button control circuit according to claim 1 or 2, wherein the power supply control module (4) comprises a field effect transistor and a resistor;
wherein a first terminal of the power module (2) is connected to a source electrode of the field effect transistor, a second terminal of the power module (2) is connected to a first terminal of the control module (3), a drain electrode of the field effect transistor is connected to a second terminal of the control module (3), the control terminal of the control module (3) is connected to a gate electrode of the field effect transistor, a first terminal of the resistor is connected to the gate electrode of the field effect transistor, and a second terminal of the resistor is connected to the source electrode of the field effect transistor.

4. The button control circuit according to claim 3, wherein the field effect transistor comprises a p-channel metal oxide semiconductor, PMOS, transistor; and
the first terminal of the power module (2) is a positive electrode, connected to the source electrode of the field effect transistor, and the second terminal of the power module (2) is a negative electrode, connected to the first terminal of the control module (3); wherein the negative electrode of the power module (2) is grounded, and the first terminal of the control module (3) is a ground terminal.

5. The button control circuit according to claim 4, wherein a first terminal of the button module (1) is connected to the positive electrode of the power module (2), and a second terminal of the button module (1) is connected to the second terminal of the control module (3), wherein the second terminal of the control module (3) is a power terminal.

6. The button control circuit according to claim 3, wherein the field effect transistor comprises an n-channel metal oxide semiconductor, NMOS, transistor; and
the first terminal of the power module (2) is a negative electrode, connected to the source electrode of the field effect transistor, and the second terminal of the power module (2) is a positive electrode, connected to the first terminal of the control module (3); wherein the negative electrode of the power module (2) is grounded, and the second terminal of the control module (3) is a power terminal.

7. The button control circuit according to claim 6, wherein a first terminal of the button module (1) is connected to the negative electrode of the power module (2), and a second terminal of the button module (1) is connected to the second terminal of the control module (3), wherein the second terminal of the control module (3) is a ground terminal.

8. The button control circuit according to any one of claims 1 to 7, wherein the button module (1) comprises a button matrix circuit, a bottom structure of at least one button in the button matrix circuit is provided with a first portion and a second portion that are separated, and a printed circuit board which is in contact with the bottom structure of the at least one button is provided with four contacts, wherein when the at least one button is pressed, two contacts of the four contacts are in contact with the first portion, so that the two contacts are turned on to turn on the path between the power module (2) and the control module (3), another two contacts of the four contacts are in contact with the second portion, so that the another two contacts are turned on to turn on the button encoded signal trigger path, thereby turning on the path between the power module (2) and the control module (3) and the button encoded signal trigger path simultaneously.

9. A remote controller, **characterized by**, comprising the button control circuit according to any one of claims 1 to 8.

10. A button control method, applied to a control module in the button control circuit according to any one of claims 1 to 8, **characterized by**, comprising:
starting (1001) timing and outputting a first control signal to a power supply control module when obtaining a power signal in a power-off state, the first control signal being configured to control the power supply control module to be turned on, so as to supply power to the control module within a preset delay duration through a power module; and
outputting (1002) a second control signal to the power supply control module when a button module is not operated within the preset delay duration, wherein the second control signal is configured to control the power supply control module to be turned off, so that the power module stops supplying power to the control module.

11. The button control method according to claim 10, further comprising:
when the button module is operated within the preset delay duration, receiving a button encoded signal output by the button module, performing an operation corresponding to the button encoded signal, and restarting timing.

12. An electronic device, **characterized by**, comprising: a processor, a memory, and a communication bus, wherein the processor and the memory communicate with each other through the communication bus;
the memory is configured to store a computer program; and
the processor is configured to execute the program stored in the memory to implement the button control method according to claim 10.

13. The electronic device according to claim 12, wherein the method further comprises:
when the button module is operated within the preset delay duration, receiving a button encoded signal output by the button module, performing an operation corresponding to the button encoded signal, and restarting timing.

14. A computer-readable storage medium, **characterized in that**, the storage medium stores a computer program that, when executed by a processor, cause the processor to perform the button control method according to claim 10 or 11.

## Patentansprüche

1. Eine Tastensteuerungsschaltung, **gekennzeichnet durch**, beinhaltend: ein Tastenmodul (1), ein Strommodul (2), ein Steuerungsmodul (3) und ein Stromversorgungssteuerungsmodul (4);
wobei das Stromversorgungssteuerungsmodul (4) zwischen dem Strommodul (2) und dem Steuerungsmodul (3) verbunden ist, ein Steuerungsanschluss des Steuerungsmoduls (3) mit einem gesteuerten Anschluss des Stromversorgungssteuerungsmoduls (4) verbunden ist und ein Ausgangsanschluss des Tastenmoduls (1) mit einem Eingangsanschluss des Steuerungsmoduls (3) verbunden ist; das Tastenmodul (1) in einem Pfad zwischen dem Strommodul (2) und dem Steuerungsmodul (3) verbunden ist;
das Tastenmodul (1) dazu konfiguriert ist, gleichzeitig den Pfad zwischen dem Strommodul (2) und dem Steuerungsmodul (3) und einen tastenkodierten Signalauslösepfad einzuschalten, wenn das Tastenmodul (1) betätigt wird, wobei sich der tastenkodierte Signalauslösepfad auf einen Pfad zwischen unterschiedlichen Eingangsanschlüssen des Steuerungsmoduls (3) bezieht, der Pfad zwischen dem Strommodul (2) und dem Steuerungsmodul (3) dazu konfiguriert ist, das Strommodul (2) dazu zu befähigen, dem Steuerungsmodul (3) direkt ein Stromsignal bereitzustellen, wenn er eingeschaltet ist, und der tastenkodierte Signalauslösepfad dazu konfiguriert ist, das Tastenmodul (1) dazu zu befähigen, ein tastenkodiertes Signal für das Steuerungsmodul (3) auszugeben, wenn er eingeschaltet ist; und
das Steuerungsmodul (3) dazu konfiguriert ist, mit der Zeitnahme zu beginnen und ein erstes Steuerungssignal an das Stromversorgungssteuerungsmodul (4) auszugeben, wenn es das Stromsignal in einem Strom-aus-Zustand erhält, wobei das erste Steuerungssignal dazu konfiguriert ist, zu steuern, dass das Stromversorgungssteuerungsmodul (4) eingeschaltet wird, sodass das Steuerungsmodul (3) innerhalb einer voreingestellten Verzögerungsdauer durch das Strommodul (2) mit Strom versorgt wird; und ein zweites Steuerungssignal an das Stromversorgungssteuerungsmodul (4) auszugeben, wenn das Tastenmodul (1) nicht innerhalb der voreingestellten Verzögerungsdauer betätigt wird, wobei das zweite Steuerungssignal dazu konfiguriert ist, zu steuern, dass das Stromversorgungssteuerungsmodul (4) ausgeschaltet wird, sodass das Strommodul (2) aufhört, das Steuerungsmodul (3) mit Strom zu versorgen.

2. Tastensteuerungsschaltung gemäß Anspruch 1, wobei das Steuerungsmodul (3) ferner dazu konfiguriert ist, wenn das Tastenmodul (1) innerhalb der voreingestellten Verzögerungsdauer betätigt wird, ein von dem Tastenmodul (1) ausgegebenes tastenkodiertes Signal zu empfangen, einen dem tastenkodierten Signal entsprechenden Vorgang durchzuführen und mit der Zeitnahme neu zu beginnen.

3. Tastensteuerungsschaltung gemäß Anspruch 1 oder 2, wobei das Stromversorgungssteuerungsmodul (4) einen Feldeffekttransistor und einen Widerstand beinhaltet;
wobei ein erster Anschluss des Strommoduls (2) mit einer Source-Elektrode des Feldeffekttransistors verbunden ist, ein zweiter Anschluss des Strommoduls (2) mit einem ersten Anschluss des Steuerungsmoduls (3) verbunden ist, eine Drain-Elektrode des Feldeffekttransistors mit einem zweiten Anschluss des Steuerungsmoduls (3) verbunden ist, der Steuerungsanschluss des Steuerungsmoduls (3) mit einer Gate-Elektrode des Feldeffekttransistors verbunden ist, ein erster Anschluss des Widerstands mit der Gate-Elektrode des Feldeffekttransistors verbunden ist und ein zweiter Anschluss des Widerstands mit der Source-Elektrode des Feldeffekttransistors verbunden ist.

4. Tastensteuerungsschaltung gemäß Anspruch 3, wobei der Feldeffekttransistor einen p-Kanal-Metalloxid-Halbleitertransistor, PMOS-Transistor, beinhaltet; und
der erste Anschluss des Strommoduls (2) eine positive Elektrode ist, die mit der Source-Elektrode des Feldeffekttransistors verbunden ist, und der zweite Anschluss des Strommoduls (2) eine negative Elektrode ist, die mit dem ersten Anschluss des Steuerungsmoduls (3) verbunden ist; wobei die negative Elektrode des Strommoduls (2) mit der Masse verbunden ist und der erste Anschluss des Steuerungsmoduls (3) ein Masseanschluss ist.

5. Tastensteuerungsschaltung gemäß Anspruch 4, wobei ein erster Anschluss des Tastenmoduls (1) mit der positiven Elektrode des Strommoduls (2) verbunden ist und ein zweiter Anschluss des Tastenmoduls (1) mit dem zweiten Anschluss des Steuerungsmoduls (3) verbunden ist, wobei der zweite Anschluss des Steuerungsmoduls (3) ein Stromanschluss ist.

6. Tastensteuerungsschaltung gemäß Anspruch 3, wobei der Feldeffekttransistor einen n-Kanal-Metalloxid-Halbleitertransistor, NMOS-Transistor, beinhaltet; und
der erste Anschluss des Strommoduls (2) eine negative Elektrode ist, die mit der Source-Elektrode des Feldeffekttransistors verbunden ist, und der zweite Anschluss des Strommoduls (2) eine positive Elektrode ist, die mit dem ersten Anschluss des Steuerungsmoduls (3) verbunden ist; wobei die negative Elektrode des Strommoduls (2) mit der Masse verbunden ist und der zweite Anschluss des Steuerungsmoduls (3) ein Stromanschluss ist.

7. Tastensteuerungsschaltung gemäß Anspruch 6, wobei ein erster Anschluss des Tastenmoduls (1) mit der negativen Elektrode des Strommoduls (2) verbunden ist und ein zweiter Anschluss des Tastenmoduls (1) mit dem zweiten Anschluss des Steuerungsmoduls (3) verbunden ist, wobei der zweite Anschluss des Steuerungsmoduls (3) ein Masseanschluss ist.

8. Tastensteuerungsschaltung gemäß einem der Ansprüche 1 bis 7, wobei das Tastenmodul (1) eine Tastenmatrixschaltung beinhaltet, eine Unterstruktur von mindestens einer Taste in der Tastenmatrixschaltung mit einem ersten Abschnitt und einem zweiten Abschnitt, die getrennt sind, versehen ist und eine Leiterplatte, die mit der Unterstruktur der mindestens einen Taste in Kontakt steht, mit vier Kontakten versehen ist, wobei, wenn die mindestens eine Taste gedrückt wird, zwei Kontakte der vier Kontakte in Kontakt mit dem ersten Abschnitt stehen, sodass die zwei Kontakte eingeschaltet werden, um den Pfand zwischen dem Strommodul (2) und dem Steuerungsmodul (3) einzuschalten, zwei andere Kontakte der vier Kontakte in Kontakt mit dem zweiten Abschnitt stehen, sodass die anderen zwei Kontakte eingeschaltet werden, um den tastenkodierten Signalauslösepfad einzuschalten, wodurch der Pfad zwischen dem Strommodul (2) und dem Steuerungsmodul (3) und der tastenkodierte Signalauslösepfad gleichzeitig eingeschaltet werden.

9. Eine Fernsteuerung, **gekennzeichnet durch**, beinhaltend die Tastensteuerungsschaltung gemäß einem der Ansprüche 1 bis 8.

10. Ein Tastensteuerungsverfahren, das angewandt wird, um ein Steuerungsmodul in der Tastensteuerungsschaltung gemäß einem der Ansprüche 1 bis 8 zu steuern, **gekennzeichnet durch**, beinhaltend:
Beginnen (1001) der Zeitnahme und Ausgeben eines ersten Steuerungssignals an ein Stromversorgungssteuerungsmodul, wenn es ein Stromsignal in einem Strom-aus-Zustand erhält, wobei das erste Steuerungssignal dazu konfiguriert ist, zu steuern, dass das Stromversorgungssteuerungsmodul eingeschaltet wird, sodass das Steuerungsmodul innerhalb einer voreingestellten Verzögerungsdauer durch ein Strommodul mit Strom versorgt wird; und
Ausgeben (1002) eines zweiten Steuerungssignals an das Stromversorgungssteuerungsmodul, wenn ein Tastenmodul nicht innerhalb der voreingestellten Verzögerungsdauer betätigt wird, wobei das zweite Steuerungssignal dazu konfiguriert ist, zu steuern, dass das Stromversorgungssteuerungsmodul ausgeschaltet wird, sodass das Strommodul aufhört, das Steuerungsmodul mit Strom zu versorgen.

11. Tastensteuerungsverfahren gemäß Anspruch 10, ferner beinhaltend:
wenn das Tastenmodul innerhalb der voreingestellten Verzögerungsdauer betätigt wird, Empfangen eines von dem Tastenmodul ausgegebenen tastenkodierten Signals, Durchführen eines dem tastenkodierten Signal entsprechenden Vorgangs und neues Beginnen der Zeitnahme.

12. Eine elektronische Vorrichtung, **gekennzeichnet durch**, beinhaltend: einen Prozessor, einen Speicher und einen Kommunikationsbus, wobei der Prozessor und der Speicher durch den Kommunikationsbus miteinander kommunizieren;
der Speicher dazu konfiguriert ist, ein Computerprogramm zu speichern; und der Prozessor dazu konfiguriert ist, das in dem Speicher gespeicherte Programm auszuführen, um das Tastensteuerungsverfahren gemäß Anspruch 10 umzusetzen.

13. Elektronische Vorrichtung gemäß Anspruch 12, wobei das Verfahren ferner Folgendes beinhaltet:
wenn das Tastenmodul innerhalb der voreingestellten Verzögerungsdauer betätigt wird, Empfangen eines von dem Tastenmodul ausgegebenen tastenkodierten Signals, Durchführen eines dem tastenkodierten Signal entsprechenden Vorgangs und neues Beginnen der Zeitnahme.

14. Ein computerlesbares Speichermedium, **dadurch gekennzeichnet, dass** das Speichermedium ein Computerprogramm speichert, das bei Ausführung durch einen Prozessor bewirkt, dass der Prozessor das Tastensteuerungsverfahren gemäß Anspruch 10 oder 11 durchführt.

## Revendications

1. Un circuit de commande de boutons, **caractérisé par** le fait de comprendre : un module boutons (1), un module d'alimentation (2), un module de commande (3) et un module de commande d'alimentation (4) ;
dans lequel le module de commande d'alimentation (4) est connecté entre le module d'alimentation (2) et le module de commande (3), une borne de commande du module de commande (3) est connectée à une borne commandée du module de commande d'alimentation (4), et une borne de sortie du module boutons (1) est connectée à une borne d'entrée du module de commande (3) ; le module boutons (1) est connecté dans un chemin entre le module d'alimentation (2) et le module de commande (3) ;
le module boutons (1) est configuré pour fermer simultanément le chemin entre le module d'alimentation (2) et le module de commande (3) et un chemin de déclenchement de signal codé de bouton lorsque le module boutons (1) est actionné, le chemin de déclenchement de signal codé de bouton se rapportant à un chemin entre différentes bornes d'entrée du module de commande (3), le chemin entre le module d'alimentation (2) et le module de commande (3) étant configuré pour permettre au module d'alimentation (2) de fournir directement un signal d'alimentation au module de commande (3) lorsqu'il est fermé, et le chemin de déclenchement de signal codé de bouton étant configuré pour permettre au module boutons (1) de délivrer un signal codé de bouton au module de commande (3) lorsqu'il est fermé ; et
le module de commande (3) est configuré pour lancer une temporisation et délivrer un premier signal de commande au module de commande d'alimentation (4) lorsqu'il obtient le signal d'alimentation dans un état hors tension, le premier signal de commande étant configuré pour commander le déblocage du module de commande d'alimentation (4), de façon à fournir de l'énergie au module de commande (3) par le module d'alimentation (2) pendant une durée de délai prédéfinie ; et délivrer un deuxième signal de commande au module de commande d'alimentation (4) lorsque le module boutons (1) n'est pas actionné pendant la durée de délai prédéfinie, le deuxième signal de commande étant configuré pour commander le blocage du module de commande d'alimentation (4), de sorte que le module d'alimentation (2) cesse de fournir de l'énergie au module de commande (3).

2. Le circuit de commande de boutons selon la revendication 1, dans lequel le module de commande (3) est en outre configuré pour, lorsque le module boutons (1) est actionné pendant la durée de délai prédéfinie, recevoir un signal codé de bouton délivré par le module boutons (1), réaliser une opération correspondant au signal codé de bouton, et relancer une temporisation.

3. Le circuit de commande de boutons selon la revendication 1 ou la revendication 2, dans lequel le module de commande d'alimentation (4) comprend un transistor à effet de champ et une résistance ;
dans lequel une première borne du module d'alimentation (2) est connectée à une électrode de source du transistor à effet de champ, une deuxième borne du module d'alimentation (2) est connectée à une première borne du module de commande (3), une électrode de drain du transistor à effet de champ est connectée à une deuxième borne du module de commande (3), la borne de commande du module de commande (3) est connectée à une électrode de grille du transistor à effet de champ, une première borne de la résistance est connectée à l'électrode de grille du transistor à effet de champ, et une deuxième borne de la résistance est connectée à l'électrode de source du transistor à effet de champ.

4. Le circuit de commande de boutons selon la revendication 3, dans lequel le transistor à effet de champ comprend un transistor métal-oxyde-semi-conducteur à canal p, PMOS ; et
la première borne du module d'alimentation (2) est une électrode positive, connectée à l'électrode de source du transistor à effet de champ, et la deuxième borne du module d'alimentation (2) est une électrode négative, connectée à la première borne du module de commande (3) ; l'électrode négative du module d'alimentation (2) étant mise à la masse, et la première borne du module de commande (3) étant une borne de masse.

5. Le circuit de commande de boutons selon la revendication 4, dans lequel une première borne du module boutons (1) est connectée à l'électrode positive du module d'alimentation (2), et une deuxième borne du module boutons (1) est connectée à la deuxième borne du module de commande (3), la deuxième borne du module de commande (3) étant une borne d'alimentation.

6. Le circuit de commande de boutons selon la revendication 3, dans lequel le transistor à effet de champ comprend un transistor métal-oxyde-semi-conducteur à canal n, NMOS ; et
la première borne du module d'alimentation (2) est une électrode négative, connectée à l'électrode de source du transistor à effet de champ, et la deuxième borne du module d'alimentation (2) est une électrode positive, connectée à la première borne du module de commande (3) ; l'électrode négative du module d'alimentation (2) étant mise à la masse, et la deuxième borne du module de commande (3) étant une borne d'alimentation.

7. Le circuit de commande de boutons selon la revendication 6, dans lequel une première borne du module boutons (1) est connectée à l'électrode négative du module d'alimentation (2), et une deuxième borne du module boutons (1) est connectée à la deuxième borne du module de commande (3), la deuxième borne du module de commande (3) étant une borne de masse.

8. Le circuit de commande de boutons selon l'une quelconque des revendications 1 à 7, dans lequel le module boutons (1) comprend un circuit à matrice de boutons, une structure de dessous d'au moins un bouton dans le circuit à matrice de boutons est pourvue d'une première portion et d'une deuxième portion qui sont séparées, et une carte de circuit imprimé qui est en contact avec la structure de dessous de l'au moins un bouton est pourvue de quatre contacts, dans lequel lorsque l'au moins un bouton est enfoncé, deux contacts des quatre contacts sont en contact avec la première portion, de sorte que les deux contacts sont fermés pour fermer le chemin entre le module d'alimentation (2) et le module de commande (3), deux autres contacts des quatre contacts sont en contact avec la deuxième portion, de sorte que les deux autres contacts sont fermés pour fermer le chemin de déclenchement de signal codé de bouton, fermant de ce fait simultanément le chemin entre le module d'alimentation (2) et le module de commande (3) et le chemin de déclenchement de signal codé de bouton.

9. Une télécommande, **caractérisée par** le fait de comprendre le circuit de commande de boutons selon l'une quelconque des revendications 1 à 8.

10. Un procédé de commande de boutons, appliqué à un module de commande dans le circuit de commande de boutons selon l'une quelconque des revendications 1 à 8, **caractérisé par** le fait de comprendre :
le lancement (1001) d'une temporisation et la délivrance d'un premier signal de commande à un module de commande d'alimentation lors de l'obtention d'un signal d'alimentation dans un état hors tension, le premier signal de commande étant configuré pour commander le déblocage du module de commande d'alimentation, de façon à fournir de l'énergie au module de commande par un module d'alimentation pendant une durée de délai prédéfinie ; et
la délivrance (1002) d'un deuxième signal de commande au module de commande d'alimentation lorsqu'un module boutons n'est pas actionné pendant la durée de délai prédéfinie, le deuxième signal de commande étant configuré pour commander le blocage du module de commande d'alimentation, de sorte que le module d'alimentation cesse de fournir de l'énergie au module de commande.

11. Le procédé de commande de boutons selon la revendication 10, comprenant en outre : lorsque le module boutons est actionné pendant la durée de délai prédéfinie, la réception d'un signal codé de bouton délivré par le module boutons, la réalisation d'une opération correspondant au signal codé de bouton, et le relancement d'une temporisation.

12. Un dispositif électronique, **caractérisé par** le fait de comprendre : un processeur, une mémoire, et un bus de communication, dans lequel le processeur et la mémoire communiquent l'un avec l'autre par le bus de communication ;
la mémoire est configurée pour stocker un programme informatique ; et
le processeur est configuré pour exécuter le programme stocké dans la mémoire afin de mettre en œuvre le procédé de commande de boutons selon la revendication 10.

13. Le dispositif électronique selon la revendication 12, dans lequel le procédé comprend en outre :
lorsque le module boutons est actionné pendant la durée de délai prédéfinie, la réception d'un signal codé de bouton délivré par le module boutons, la réalisation d'une opération correspondant au signal codé de bouton, et le relancement d'une temporisation.

14. Un support de stockage lisible par ordinateur, **caractérisé en ce que** le support de stockage stocke un programme informatique qui, lorsqu'il est exécuté par un processeur, amène le processeur à réaliser le procédé de commande de boutons selon la revendication 10 ou la revendication 11.
